# EUROPÄISCHE PATENTSCHRIFT

(11) **EP 1 355 801 B1**
(45) Veröffentlichungstag und Bekanntmachung des Hinweises auf die Patenterteilung: **25.05.2005**
(21) Anmeldenummer: 02704594.7
(22) Anmeldetag: 14.01.2002
(51) Int. Cl.: B60N 2/46

(54) **ARMLEHNENBAUGRUPPE FÜR EINE KRAFTFAHRZEUGTÜR**
ARMREST SUBASSEMBLY FOR THE DOOR OF A MOTOR VEHICLE
SOUS-ENSEMBLE D'ACCOUDOIR DESTINE A UNE PORTIERE AUTOMOBILE

(30) Priorität: 29.01.2001 DE 10104077; 10.09.2001 DE 10144485; 10.09.2001 DE 10144492
(43) Veröffentlichungstag der Anmeldung: 29.10.2003
(73) Patentinhaber: Brose Fahrzeugteile GmbH & Co. KG, Coburg, 96450 Coburg (DE)
(72) Erfinder: BÖRNCHEN, Thomas, 96052 Bamberg (DE); EISENTRAUDT, Michael, 96342 Stockheim (DE); LISTL, Eckart, 96191 Viereth-Trunstadt (DE); SCHLECHTRIEMEN, Martin, 96149 Breitengüssbach (DE); STAMMBERGER, Werner, 96253 Weissenbrunn (DE); POHL, Thomas, 91091 Grossenseebach (DE); WAGNER, Frank, 90408 Nürnberg (DE); WARTZACK, Sandro, 96103 Hallstadt (DE)
(74) Vertreter: Baumgärtel, Gunnar, Dr.
(86) Internationale Anmeldenummer: PCT/DE2002/000120
(87) Internationale Veröffentlichungsnummer: WO 2002/060721

(56) Entgegenhaltungen:
- EP-A- 0 669 221
- EP-A- 1 048 517
- DE-A- 3 930 270
- DE-A- 4 135 279
- US-A- 5 795 025
- US-A- 5 921 610

## Beschreibung

Die Erfindung betrifft eine Armlehnenbaugruppe für eine Kraftfahrzeugtür zum Einbau in Kraftfahrzeug, das eine Fahrzeuglängsachse (die bei Geradeausfahrt des Kraftfahrzeugs der Fahrtrichtung entspricht) und eine vertikale Fahrzeugachse (die senkrecht zur Fahrzeuglängsachse verläuft) aufweist, nach dem Obergebgriff des Patentanspruches 1.

Eine solche Armlehnenbaugruppe umfasst eine entlang der vertikalen Fahrzeugachse höhenverstellbare Armauflage und eine Führungseinrichtung, mittels derer die Armauflage entlang der vertikalen Fahrzeugachse geführt wird.

Eine derartige Armlehnenbaugruppe ist aus der DE 40 02 242 A1 bekannt. Die dort beschriebene Führungseinrichtung umfasst zwei parallel zueinander verlaufende, sich in Verstellrichtung der Armauflage erstreckende und in Fahrzeuglängsrichtung voneinander beabstandete Führungsschienen zur Führung der Armauflage.

Aus der US-A-5 921 610 ist eine Armlehnenbaugruppe mit einer Führungseinrichtung bekannt, mittels der die Armauflage entlang einer vertikalen Fahrzeugachse geführt wird. Die Führungseinrichtung beinhaltet ein längserstrecktes Führungselement der Armauflage und einen zusätzlichen Stützpfosten in Fahrzeugquerrichtung nebeneinander angeordnet. Ein Spiel zwischen der Armauflage und dem Stützpfosten ist hier nicht gegeben.

Der Erfindung liegt das Problem zugrunde, eine Armlehnenbaugruppe der eingangs genannten Art zu schaffen, die sich durch eine neuartige Führungseinrichtung auszeichnet.

Die Führungseinrichtung der Armlehnenbaugruppe nach Anspruch 1 weist genau einen entlang der Verstellrichtung längserstrecktes Führungselement auf, mit dem die Armauflage derart in Verstellrichtung geführt ist, dass in Fahrzeuglängsrichtung auf die Armauflage wirkende Kräfte über das Führungselement in das tragende Türelement eingeleitet werden und eine Verschiebung der Armauflage in Fahrzeuglängsrichtung verhindert wird. Neben dem mindestens einen längserstreckten Führungselement sind zusätzlich Mittel vorgesehen , die eine Schwenkbewegung der Armauflage um die vertikale Fahrzeugachse begrenzen oder verhindern, je nach dem ob eine begrenzte Schwenkbewegung zulässig sein soll oder ob jedes Verschwenken um die vertikale Fahrzeugachse ausgeschlossen sein soll. Diese zusätzlichen Mittel werden durch Stützbereiche gebildet, welche derart angeordnet sind, dass sie einem Verschwenken der Armauflage bezüglich des tragenden Türelementes ab einem vorgebbaren Schwenkwinkel entgegenwirken. Die Stützbereiche sind vorzugsweise in Fahrzeuglängsrichtung voneinander beabstandet beidseits des längserstreckten Führungselementes angeordnet. Die Armauflage und das tragende Türelement wirken über die Stützelemente derart mit Spiel zusammen, dass entlang der Fahrzeuglängsrichtung wirkende Kräfte nur über das längserstreckte Führungselement in das tragende Türelement eingeleitet werden.

Die Verstellung der Armauflage muss dabei nicht genau parallel zur vertikalen Fahrzeugachse erfolgen. Entscheidend ist vielmehr, dass die Verstellbewegung eine substanzielle Komponente entlang der vertikalen Fahrzeugachse umfasst, so dass die Armauflage bei einer Verstellbewegung angehoben oder abgesenkt wird.

Bei dem genau einen Führungselement muss es sich nicht um ein einteiliges Führungselement handeln. Vielmehr kann das Führungselement auch aus mehreren, entlang der Verstellrichtung der Armauflage hintereinander angeordneten Abschnitten bestehen. Von Bedeutung ist lediglich, dass entlang der Fahrzeuglängsachse betrachtet nur an einer Stelle ein Führungselement entlang der Verstelleinrichtung der Armauflage verläuft. Das Führungselement umfasst also nicht mehrere separate, entlang der Fahrzeuglängsrichtung voneinander beabstandete Führungselemente, sondern - in Fahrzeuglängsrichtung betrachtet - nur einen zusammenhängenden Führungsbereich. Dieses ist derart gestaltet, dass auf die Armauflage in Fahrzeuglängsrichtung wirkende Kräfte, die z. B. beim Abstützen eines Armes auftreten, in ein tragendes Türelement eingeleitet werden, ohne dass es zu einer ungewollten Verschiebung der Armauflage in Fahrzeuglängsrichtung oder einer Beschädigung der Armlehnenbaugruppe kommt.

Zusätzlich kann das längserstreckte Führungselement eingerichtet sein, um ein Verkippen der Armauflage um eine senkrecht zur Türebene, d. h. der durch die Fahrzuglängsachse und die vertikale Fahrzeugachse aufgespannten Ebene, verlaufende Achse (horizontale Fahrzeugquerachse) zu verhindern.

Die Armauflage kann an einem höhenverstellbaren Träger, z. B. in Form einer Trägerplatte, festgelegt und somit gemeinsam mit dieser in der Höhe verstellbar sein.

Das Führungselement kann insbesondere durch einen vorzugsweise rohrförmig ausgestalteten Pfosten gebildet werden, der beispielsweise hohlzylindrisch oder als Profilteil (Profilschiene) ausgebildet sein kann. Bei einer hohlzylindrischen Ausbildung des Führungselementes kann dieses ein gewisses Verschwenken der Armauflage um die Erstreckungsrichtung des Führungselementes ermöglichen.

In einer bevorzugten Ausführungsform der Erfindung ist das längserstreckte Führungselement an einem tragenden Türelement festgelegt; es kann jedoch auf der höhenverstellbaren Armauflage zugeordnet und mit dieser verbunden sein.

Dem längserstreckten Führungselement ist mindestens ein Führungsstück zugeordnet, das relativ zu diesem verschiebbar ist, wobei durch die Relativbewegung von Führungselement und Führungsstück die gewünschte Verstellung der Armauflage bewirkt werden kann.

Insbesondere können zwei entlang der Erstreckungsrichtung des Führungselementes voneinander beabstandete Führungsstücke vorgesehen sein, die relativ zu dem Führungselement verschiebbar sind. Die beiden Führungsstücke sind dabei derart angeordnet, dass sie den unter den bestehenden konstruktiven Gegebenheiten größtmöglichen Abstand entlang der Erstreckungsrichtung des Führungselementes aufweisen. Alternativ kann genau ein Führungsstück vorgesehen sein, welches die unter den bestehenden konstruktiven Gegebenheiten größtmögliche Länge entlang der Erstreckungsrichtung des Führungselements aufweist.

In jedem Fall soll erreicht werden, dass das Führungselement einerseits und das mindestens eine Führungsstück andererseits an möglichst weit voneinander beabstandeten Punkten entlang der Erstreckungsrichtung des Führungselementes noch zusammenwirken, um eine optimale Drehmomentaufnahme zu ermöglichen, die ein Verkippen der Armauflage verhindert.

Je nach Ausbildung des längserstreckten Führungselements können die Führungsstücke durch Führungsbuchsen, durch Verjüngungen eines Führungskanals oder durch Profilstücke gebildet werden.

Entsprechend der bevorzugten Festlegung des Führungselementes an einem tragenden Türelement sind die Führungsstücke vorzugsweise bezüglich der Armauflage fixiert, z. B. durch Befestigung an dem die Armauflage aufnehmenden höhenverstellbaren Träger.

Bei Verwendung von zwei Führungsstücken sind diese vorzugsweise entlang der vertikalen Fahrzeugachse derart angeordnet, dass sie sich an dem einen Rand des Trägers erstre-cken. Bei Verwendung nur eines Führungsstückes erstreckt sich dieses über die gesamte Ausdehnung des Trägers entlang der vertikalen Fahrzeugachse.

Die Stützbereiche können beispielsweise durch Vorsprünge gebildet werden, die zwischen dem tragenden Türelement und der Armauflage vorgesehen sind und zwar insbesondere in Fahrzeuglängsrichtung voneinander beabstandet, beidseits des längserstreckten Führungselementes. Bei Verwendung eines höhenverstellbaren Trägers zur Aufnahme der Armauflage befinden sich diese Vorsprünge vorzugsweise zwischen dem höhenverstellbaren Träger und dem tragenden Türelement, wobei die Vorsprünge insbesondere an dem tragenden Türelement vorgesehen, z.B. einstückig angeformt sein können.

Gemäß einer anderen Variante werden die Stützbereiche durch zwei in Fahrzeuglängsrichtung voneinander beabstandete, beidseits des Führungselements angeordnete Längsführungen gebildet, entlang derer die Armauflage bzw. deren Träger und das tragende Türelement miteinander gekoppelt sind. Diese Längsführungen können wiederum gebildet werden durch einen Führungskanal und eine zugeordnete Führungsstange, wobei der Führungskanal z.B. an dem Träger der Armauflage und die Führungsstange an dem tragenden Türelement angeordnet sein kann.

Entscheidend ist, dass die zusätzlichen Stützbereiche dazu vorgesehen sind, eine Kippbewegung der Armauflage um die vertikale Fahrzeugachse zu verhindern. Das Einleiten in Fahrzeuglängsrichtung wirkender Kräfte in das tragende Türelement erfolgt demgegenüber ausschließlich über das genau eine längserstreckte und hierfür vorgesehene Führungselement. D.h., dass die zusätzlichen Stützbereiche derart ausgebildet sind, dass sie beim ordnungsgemäßen, zerstörungsfreien Betrieb der Armauflage keine in Fahrzeuglängsrichtung wirkenden Kräfte aufnehmen und übertragen, sondern lediglich Kippmomente bezüglich der vertikalen Fahrzeugachse.

In einer bevorzugten Weiterbildung der Erfindung sind an dem Verstellmechanismus der Armauflage außerdem elastische Mittel vorgesehen, die als Klapperschutz dienen.

Weitere Merkmale und Vorteile der Erfindung werden bei der nachfolgenden Beschreibung eines Ausführungsbeispiels anhand der Figuren deutlich werden.

Es zeigen:
- Figur1a: eine Rückansicht einer Türinnenverkleidung in perspektivischer Darstellung;
- Figur 1b: eine Vorderansicht der Türinnenverkleidung aus Figur 1a in perspektivischer Darstellung;
- Figur 1c: eine Vorderansicht der Türinnenverkleidung gemäß Figur 1b mit einer höhenverstellbaren Armauflage;
- Figuren2a und 2b: zwei unterschiedliche perspektivische Darstellungen einer Kraftfahrzeugtür mit einer höhenverstellbaren Armauflage;
- Figuren 3a und 3b: zwei perspektivische Darstellungen einer Kraftfahrzeugtür gemäß den Figuren 2a und 2b in einem Montagezustand, in dem eine Führungseinrichtung der Armauflage erkennbar ist;
- Figur 3c: eine Detaildarstellung der Führungseinrichtung aus den Figuren 3a und 3a und 3b;
- Figur 4a: einen Querschnitt durch eine Türinnenverkleidung mit einer an einem höhenverstellbaren Träger befestigten Armauflage;
- Figur 4b: einen Längsschnitt durch die Antriebs- und Führungsmittel einer höhenverstellbaren Armauflage gemäß Figur 4a;
- Figur 4c: einen vergrößerten Ausschnitt des Armlehnenbereiches gemäß Figur 4a;
- Figur 5a: eine perspektivische Darstellung einer Führungseinrichtung für eine höhenverstellbare Armauflage, die zusätzlich zu einem zentralen längserstreckten Führungselement zwei Führungsschienen als Verdrehsicherungen aufweist;
- Figur 5b: eine perspektivische Rückansicht der Führungseinrichtung aus Figur 5a;
- Figur 5c: eine Schnittdarstellung der Führungseinrichtung aus den Figuren 5a und 5b;
- Figur 6: eine schematische Darstellung des Bauraums in einer Kraftfahrzeugtür, der zur Aufnahme einer Armauflage dient;
- Figuren 7a bis 7e: unterschiedliche Darstellungen einer Führungseinrichtung für eine höhenverstellbare Armauflage, die genau ein längserstrecktes Führungselement in Form eines rohrförmigen Führungspfosten aufweist;
- Figur 8: einen Querschnitt durch eine Führungseinrichtung der in den Figuren 7a bis 7e gezeigten Art, wobei zusätzlich Mittel zur Begrenzung eines Verkippens der Armauflage um die vertikale Fahrzeugachse vorgesehen sind;
- Figuren 9a bis 9c: Schnittdarstellungen dreier unterschiedlicher Ausführungsformen eines entlang der vertikalen Fahrzeugachse erstreckten Führungspfostens sowie des jeweils zugeordneten Führungsstückes;
- Figuren 10a und 10b: Querschnitte zweier unterschiedlicher Ausführungsformen einer Verkippsicherung für eine Armauflage.

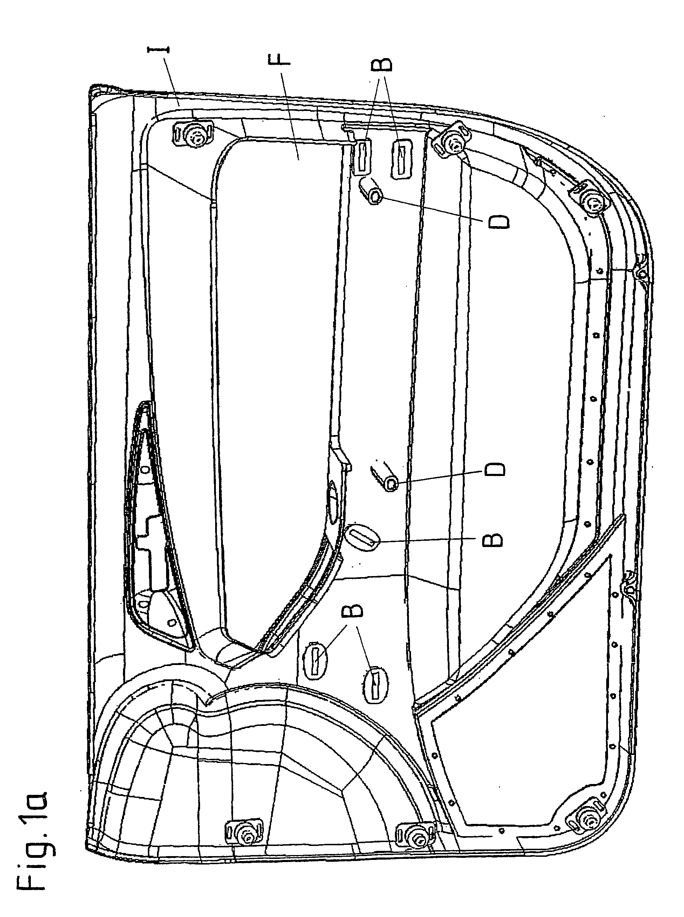

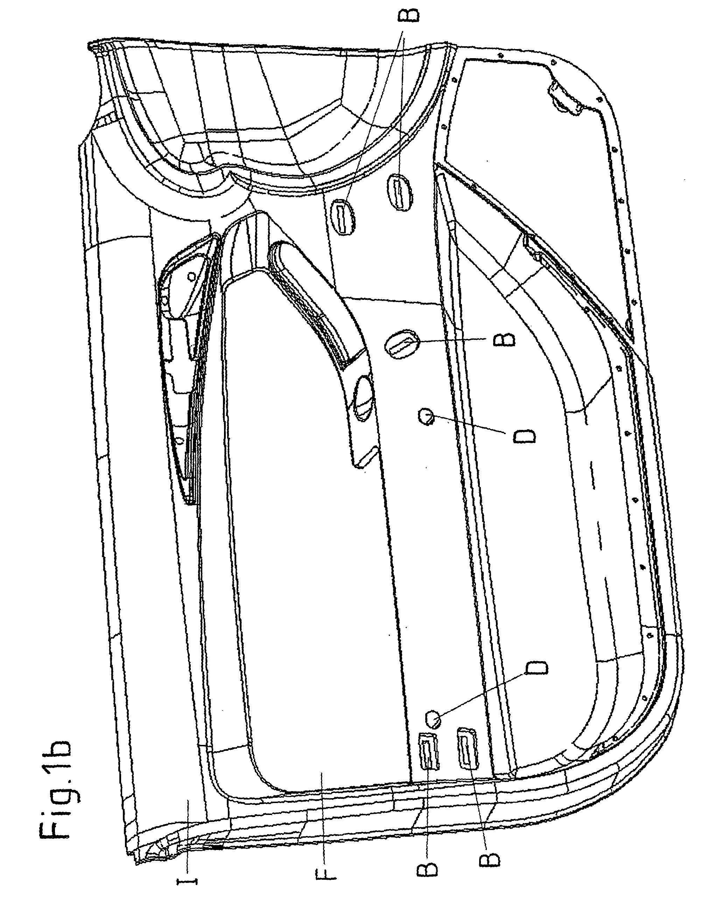

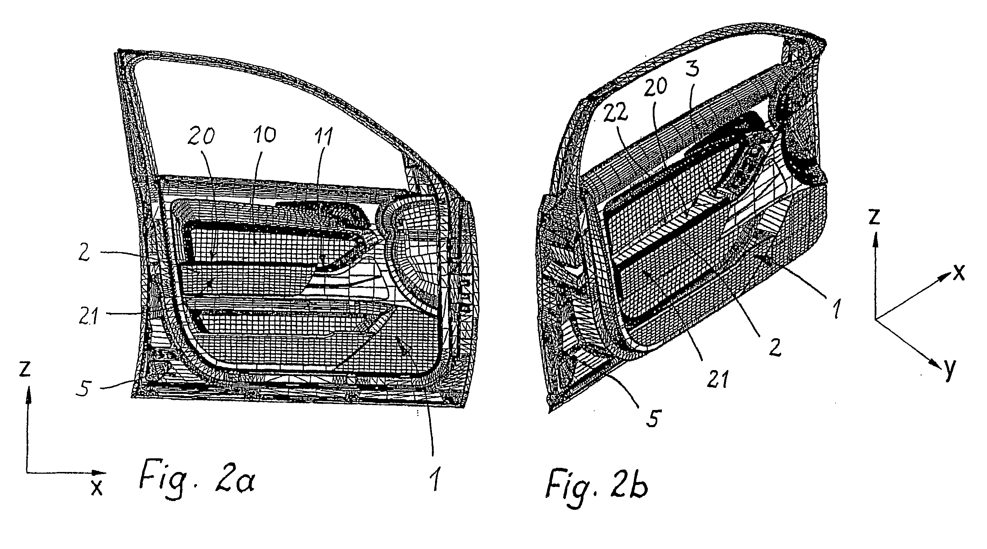

Die Figuren 1a und 1b zeigen eine Rückansicht (vom Türinnenblech einer Fahrzeugtür her gesehen) bzw. eine Vorderansicht (vom Innenraum eines Kraftfahrzeugs her gesehen) einer Türinnenverkleidung I, mit der das Türinnenblech einer Fahrzeugtür zum Türinnenraum hin abgedeckt und verkleidet wird. Die Türinnenverkleidung I weist auf ihrer Rückseite zwei Distanzelemente D auf, die sich mit ihrer der Türinnenverkleidung abgewandten Stirnseite an dem Türinnenblech oder einer mit dem Türinnenblech verbundenen Grundplatte abstützen, wenn die Türinnenverkleidung I am Türinnenblech befestigt ist. Hierdurch wird die Distanz zwischen Türinnenverkleidung und Türinnenblech festgelegt. Die Distanzelemente D sind holzylindrisch ausgestaltet, so dass sie von Befestigungsschrauben durchgriffen werden können, die der Befestigung der Türinnenverkleidung am Türinnenblech dienen.

Die Türinnenverkleidung I weist ferner einen Freiraum F auf, der die Montage einer Armauflage gestattet. Unterhalb des Freiraumes F sind Befestigungsstellen B zur Befestigung einer Zierleiste an der Türinnenverkleidung I vorgesehen.

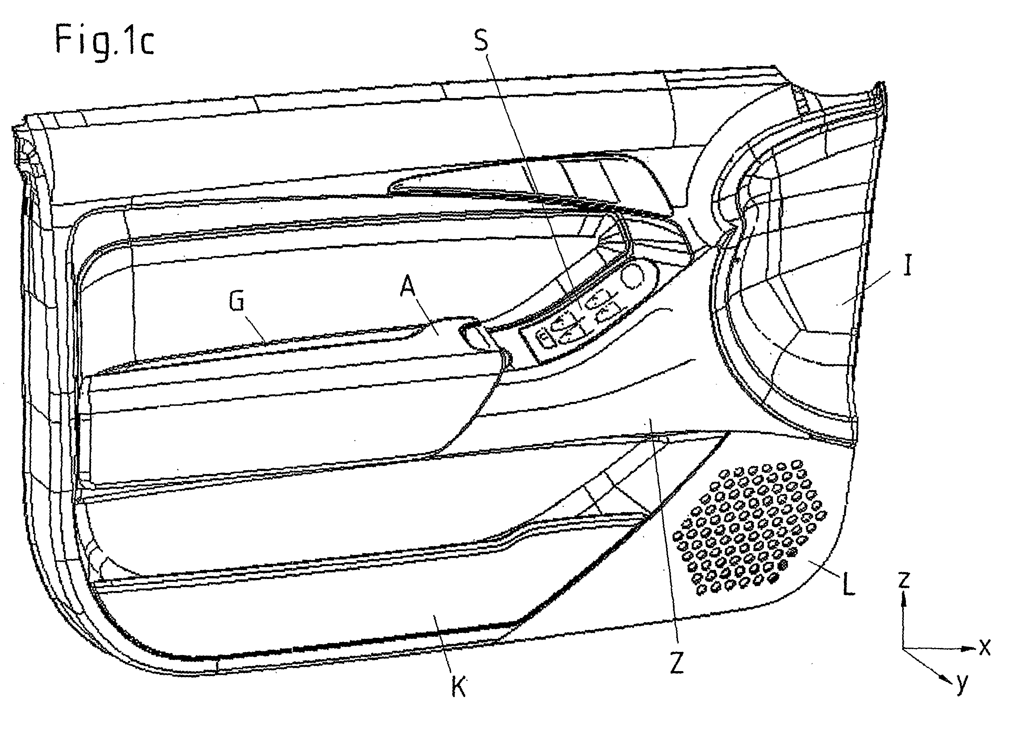

Figur 1c zeigt die Türinnenverkleidung I in einer Ansicht gemäß Figur 1b nach Befestigung einer Armlehnenbaugruppe mit einer Armauflage A, die eine Griffmulde G aufweist. Ferner ist vor der Armauflage A ein Schalterblock S angeordnet, mit dem elektrische Funktionskomponenten des Fahrzeugs, wie z. B. die Armauflage selbst, sowie elektrische Fensterheber oder elektrische Sitzverstelleinrichtungen betätigbar sind.

Unterhalb der Armauflage A ist eine Zierleiste Z der Türinnenverkleidung I befestigt, die mit einem sich parallel hierzu erstreckenden Abschnitt der Armauflage A überlappt. Unterhalb der Zierleiste Z befinden sich eine Kartentasche K sowie eine Lautsprecherabdeckung L.

In den Figuren 2a und 2b ist in unterschiedlichen Ansichten jeweils perspektivisch eine Fahrzeugtür dargestellt, die zum Fahrzeuginnenraum hin mit einer Türinnenverkleidung 1 verkleidet ist und die eine höhenverstellbare Armauflage 2 aufweist, welche zusammen mit der Türinnenverkleidung 1 ein Türinnenverkleidungsmodul mit einstellbarer Höhe der Armauflage bildet. Die Oberfläche 10 (Spiegel) der Türinnenverkleidung 1 erstreckt sich im wesentlichen in der Türebene, d. h. in einer Ebene, welche durch die Fahrzeuglängsachse x sowie die vertikale Fahrzeugachse z definiert ist.

Die Armauflage 2 weist einen in Fahrzeuglängsrichtung x erstreckten Stützbereich 20 auf, der sich im wesentlichen senkrecht zur Türebene erstreckt, sowie einen von dem Stützbereich 20 entlang der vertikalen Fahrzeugachse z nach unten abstehenden Verkleidungsbereich 21, der mit einem parallel hierzu verlaufenden Abschnitt der Türinnenverkleidung 1 überlappt. Der Verkleidungsbereich 21 muss dabei nicht exakt parallel zu der vertikalen Fahrzeugachse z verlaufen; auch bei einer leichten Neigung des Verkleidungsbereiches 21 bezüglich der vertikalen Fahrzeugachse z erstreckt sich jener noch entlang dieser. Das gilt entsprechend für den überlappenden Abschnitt der Türinnenverkleidung 1. Die Armauflage 2 weist somit die Form eines umgedrehten L auf, wobei der Stützbereich 20 den einen Schenkel und der Verkleidungsbereich 21 den anderen Schenkel der L-förmigen Armauflage 2 bildet und der Verkleidungsbereich 21 sich entlang der vertikalen Fahrzeugachse erstreckt und dabei sein freies Ende nach unten hin von dem Stützbereich 20 abgewandt ist, der sich im wesentlichen horizontal erstreckt.

Vom Fahrzeuginnenraum her gesehen ist hinter dem Stützbereich 20 der Armauflage 2 eine in die Armauflage integrierte Griffmulde 22 vorgesehen, die einen Türzuziehgriff ersetzen kann und sich in Fahrzeuglängsrichtung x im wesentlichen über die gesamte Länge der Armauflage 2 erstreckt. Der Stützbereich 20 der Armauflage verläuft im wesentlichen horizontal, d. h. in einer Ebene, die durch die Fahrzeuglängsachse x sowie die senkrecht zur Türebene verlaufende Fahrzeugquerachse y definiert wird. Dieser Stützbereich 20 dient zum Abstützen des Unterarmes eines Fahrzeuginsassen und ist zur Anpassung an die Bedürfnisse unterschiedlicher Fahrzeuginsassen entlang der vertikalen Fahrzeugachse z in der Höhe verstellbar, und zwar zusammen mit der Armauflage 2 als Ganzes.

Zur Betätigung der Höhenverstellung der Armauflage 2 ist ein Betätigungselement 3 vorgesehen, das in Fahrzeuglängsrichtung x (Fahrtrichtung des entsprechenden Fahrzeugs bei Geradeausfahrt) betrachtet vor dem Stützbereich 20 der Armauflage 2 angeordnet ist und von der Hand eines auf dem Stützbereich 20 aufliegenden Unterarmes eines Fahrzeuginsassen bequem umgriffen und bedient werden kann. Mittels dieses elektrischen Betätigungselementes kann ein elektrischer Schalter betätigt werden, der eine elektrische Verstelleinrichtung zur Einstellung der Höhe der Armauflage 2 und damit insbesondere des Stützbereiches 20 der Armauflage 2 aktiviert.

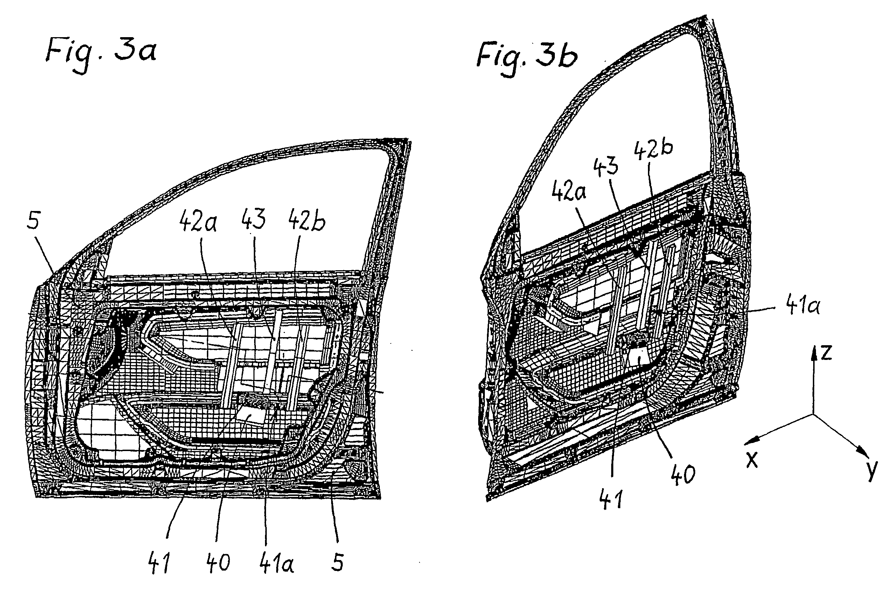

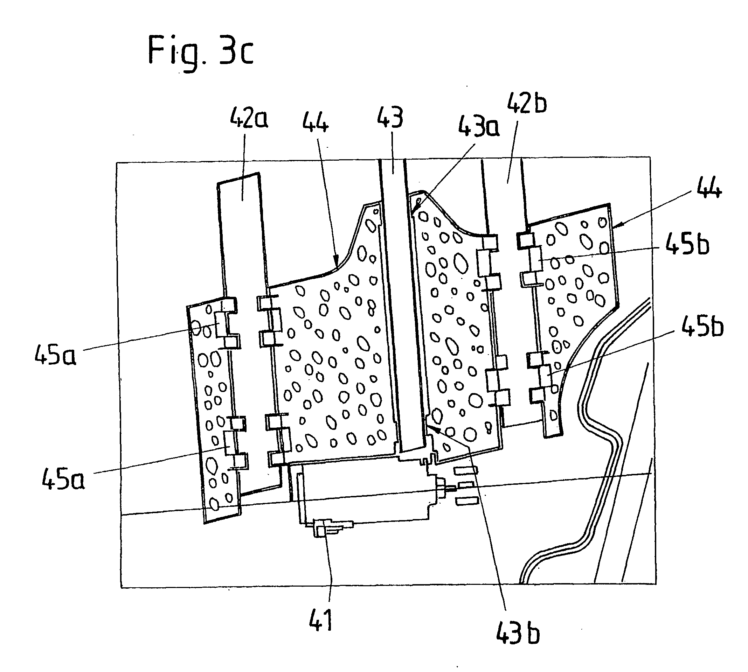

In den Figuren 3a bis 3c ist eine im Aufbau den Figuren 2a und 2a entsprechende Fahrzeugtür dargestellt, und zwar in einem teilweise montierten Zustand, in dem die Verstelleinrichtung zur Einstellung der Höhe der Armauflage erkennbar ist. Zur Erzeugung der Verstellkraft ist danach ein elektrischer Antriebsmotor 41 vorgesehen, dem eine elektronische Steuerungseinheit 40 zur Steuerung der Verstellgeschwindigkeit sowie ggf. zum stoßfreien Anfahren der Endlange der Armauflage sowie zur Gewährleistung eines Einklemmschutzes zugeordnet ist. Der Antriebsmotor 41 treibt ein Spindelgetriebe 41 a an, das die Verstellkraft des Antriebsmotors 41 auf eine Trägerplatte 44 überträgt, an der die höhenverstellbare Armauflage befestigbar ist.

Zur Führung der Trägerplatte 44 und damit der Armauflage bei einer Verstellbewegung entlang der vertikalen Fahrzeugachse ist ein längserstrecktes Führungselement 43 in Form eines Führungspfostens vorgesehen, das sich entlang der Verstellrichtung der Armauflage (leicht geneigt zur vertikalen Fahrzeugachse z) erstreckt und auf dem die Trägerplatte 44 derart geführt ist, dass eine Verschiebung der Trägerplatte 44 und damit der zugeordneten Armauflage 2 in Fahrzeuglängsrichtung x (Fahrtrichtung des entsprechenden Fahrzeugs bei Geradeausfahrt) sowie eine Kippbewegung der Armauflage 2 um die senkrecht zur Türebene (der durch die Fahrzeuglängsachse x und die vertikale Fahrzeugachse z gebildeten Ebene) verlaufende horizontale Fahrzeugquerachse y verhindert werden kann.

Die Führung der Trägerplatte 44 an dem Führungspfosten 43 erfolgt dabei über einen an der Trägerplatte 44 vorgesehenen Führungskanal, an dem zwei Führungsstücke 43a, 43b in Form von Verjüngungen des Führungskanals ausgebildet sind. Diese beiden Verjüngungen 43a, 43b sind an jeweils einem Ende des durchgehenden Führungskanals, d. h. einerseits am entlang der vertikalen Fahrzeugachse z oberen Rand und andererseits am unteren Rand der Trägerplatte 44 vorgesehen. Hierdurch werden über die Armauflage und die hiermit verbundene Trägerplatte 44 eingeleitete Kippmomente um die Fahrzeugquerachse (y-Achse) bestmöglich abgestützt. Um auch Kippmomente um die vertikale Fahrzeugachse (z-Achse) abzustützen, sind zusätzlich zwei seitliche Führungsschienen 42a, 42b vorgesehen, die entlang der Fahrzeuglängsachse x voneinander beabstandet beidseits des zentralen Führungspfostens 43 angeordnet sind. Mit diesen steht die Trägerplatte 44 jeweils über ein Paar Gleiter 45a bzw. 45b in Eingriff.

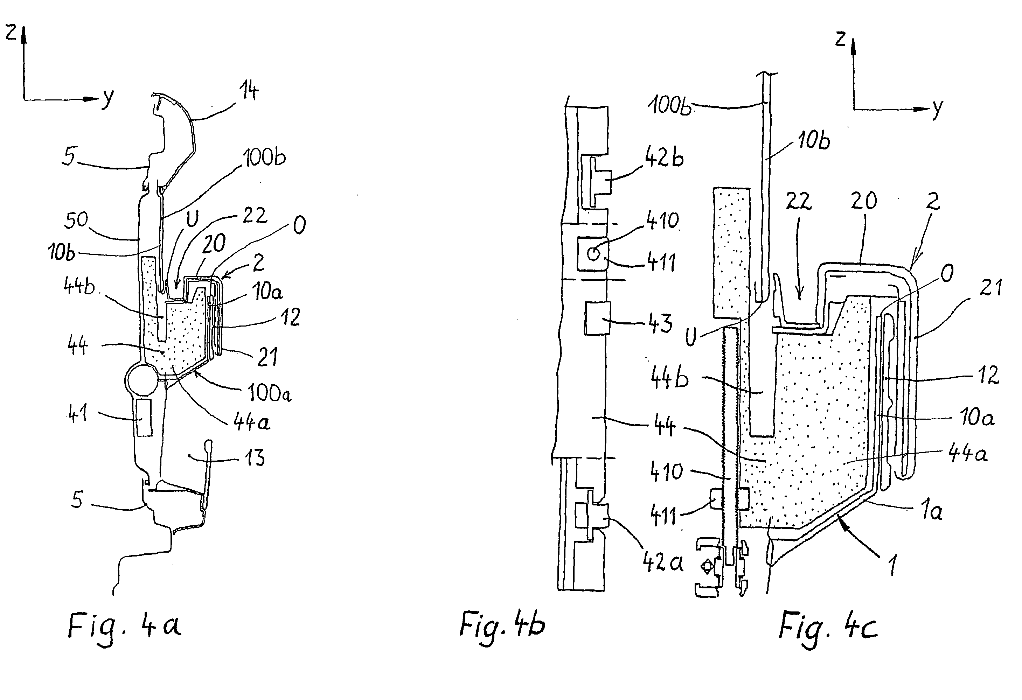

Figur 4a zeigt einen Querschnitt durch eine Kraftfahrzeugtür gemäß den Figuren 2a und 2b. Die Türinnenhaut der Kraftfahrzeugtür wird gebildet durch ein Türinnenblech 5 mit einer großflächigen Ausnehmung, die durch einen Aggregateträger 50 überdeckt ist. An einem derartigen Aggregateträger 50 können außerhalb der Fahrzeugtür eine Vielzahl von Türkomponenten, wie z. B. ein elektrischer Fensterheber, ein Türschloss, ein Lautsprechersystem, ein Seitenairbag und dergleichen, vormontiert und dann als komplett vormontierte Baugruppe (Türmodul) an der entsprechenden Fahrzeugtür bzw. deren Türinnenblech 5 befestigt werden.

Im vorliegenden Fall trägt der Aggregateträger 50 auch den Verstellmechanismus der höhenverstellbaren Armauflage 2, der als Antriebseinheit einen Antriebsmotor 41 aufweist. Der Antriebsmotor 41 treibt einen nachfolgend anhand der Figuren 4b und 4c näher zu beschreibenden Verstellmechanismus an, mit dem ein Träger 44 der Armauflage 2 entlang der vertikalen Fahrzeugachse z verstellbar ist. Der Träger umfasst eine hinter der Türinnenverkleidung 1, und zwar sowohl hinter einem unteren Teil 100a als auch einem oberen Teil 100b der Türinnenverkleidung angeordnete Trägerplatte sowie einen hiervon abstehenden Verbindungsabschnitt 44a, der sich in den Bereich zwischen den freien Enden O, U der Türinnenverkleidung erstreckt. Dort ist an dem Träger 44 die Armauflage 2 in geeigneter Weise befestigt.

Zwischen der Trägerplatte und dem Verbindungsabschnitt 44a des Trägers 44 der Armauflage 2 erstreckt sich eine kanalartige Ausnehmung 44b, in die der obere Teil 100b der Türinnenverkleidung 1 bei einer Verstellung der Armauflage 2 nach oben eintaucht. Hierdurch wird eine Kollision des Trägers 44 mit der Türinnenverkleidung 1 bei einer Höhenverstellung vermieden.

Nach oben hin schließt die Türinnenverkleidung mit einer Brüstungsverkleidung 14 ab. Der beim Anheben der Armauflage 2 unterhalb von deren Verkleidungsbereich 21 teilweise frei werdende obere Abschnitt 10a des unteren Teiles 100a der Türinnenverkleidung 1 ist mit einer Zierblende 12 abgedeckt.

Gemäß den Figuren 4b und 4c ist zur Übertragung der Verstellkraft von dem Antriebsmotor 41 auf den höhenverstellbaren Träger 44 ein Spindelgetriebe mit einer vom Antriebsmotor angetriebenen, drehbaren Spindel 410 und mit einer drehfest mit dem Träger 44 verbundenen, entlang der vertikalen Fahrzeugachse z verschiebbaren Spindelmutter 411 vorgesehen, die die Spindel 410 umgreift und mit dieser in Eingriff steht.

Die Führung des Trägers 44 entlang der vertikalen Fahrzeugachse erfolgt entlang eines zentralen Führungspfostens 43, wobei zusätzlich als Verdreh-.bzw. Verkippsicherung beidseits des zentralen Führungspfostens 43 zwei seitliche Führungsschienen 42a, 42b vorgesehen sind, auf denen der Träger 44 mittels Gleitern verschiebbar lagert.

Dem Antriebsmotor 41 kann ferner eine elektronische Steuerungseinheit zur Steuerung der Verstellgeschwindigkeit zum stoßfreien Anfahren der Endlagen der Armauflage 2 sowie gegebenenfalls zur Gewährleistung eines Einklemmschutzes zugeordnet sein.

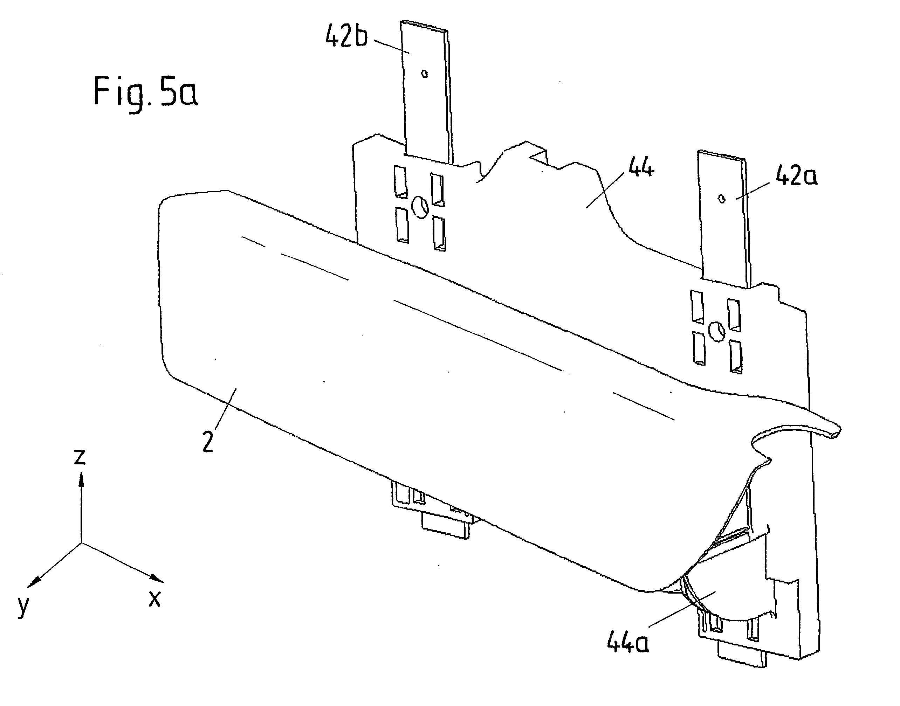

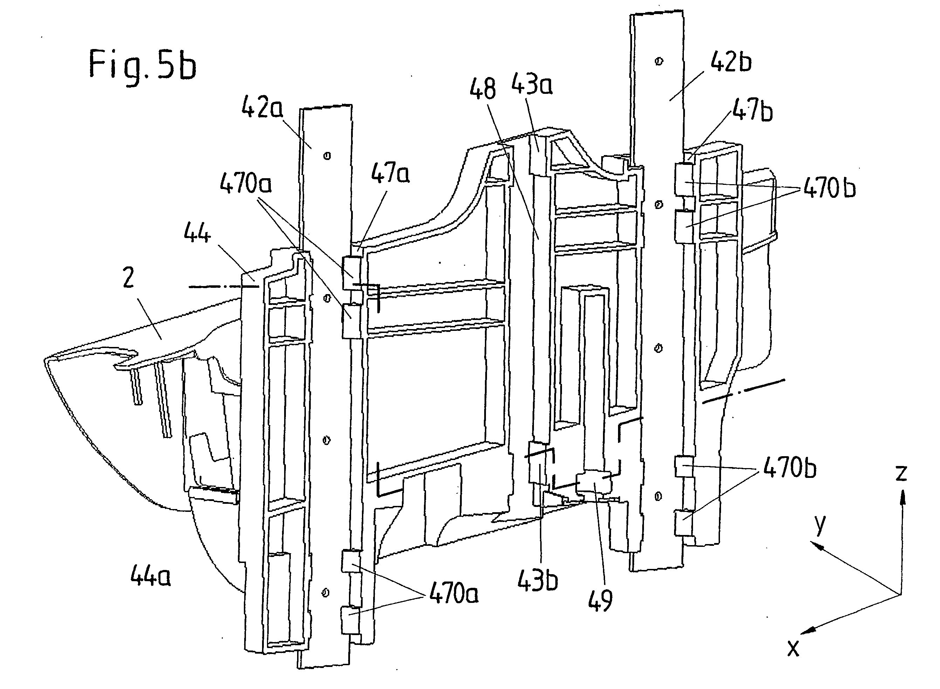

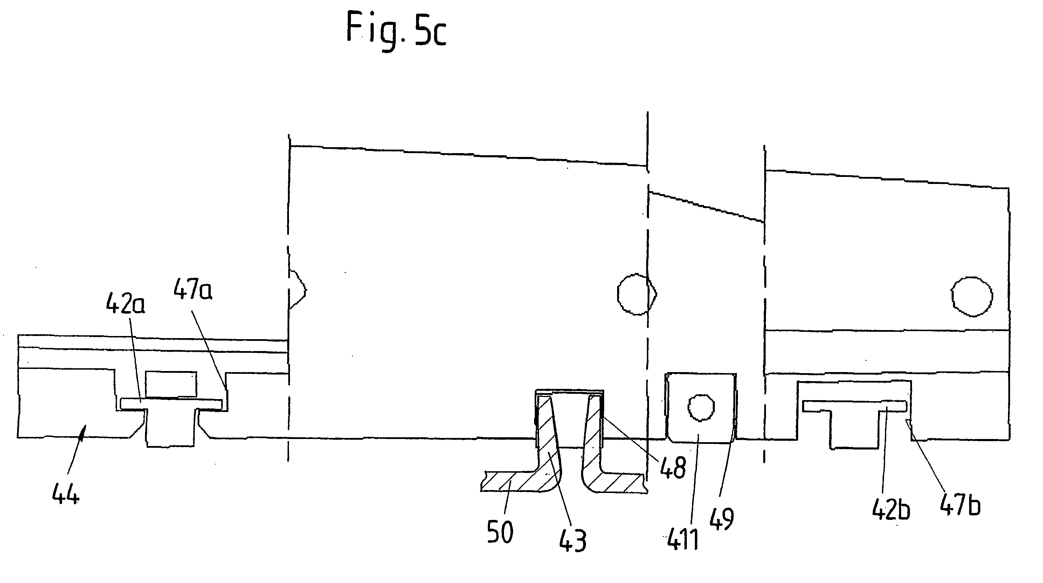

Die Figuren 5a bis 5c zeigen in größerem Detail eine Führungseinrichtung für eine entlang der vertikalen Fahrzeugachse z höhenverstellbare Armauflage 2, die mit einer höhenverstellbaren Trägerplatte 44 verbunden ist. Hierzu ist die Armauflage 2 an einem von der Trägerplatte 44 abstehenden Verbindungsabschnitt 44a befestigt.

In der Trägerplatte 44 erstreckt sich entlang der vertikalen Fahrzeugachse z (aber nicht genau parallel zu dieser, sondern vielmehr leicht geneigt) ein Führungskanal 48, der an seinem oberen und unteren Ende (entsprechend dem in Fahrzeuglängsrichtung z oberen und unteren Rand der Trägerplatte 44) jeweils einen Führungsbereich 43a bzw. 43b (Führungsstücke) aufweist, das durch eine Verjüngung des Führungskanals 48 gebildet ist. Mit diesen Führungsstücken bzw. Führungsbereichen 43a, 43b wird die Trägerplatte 44 auf einem Führungspfosten (vergleiche Figuren 3a bis 3c) geführt, der sich ebenfalls entlang der vertikalen Fahrzeugachse erstreckt und der mit einem tragenden Türelement, z. B. der Türinnenhaut eines Kraftfahrzeugs, verbunden ist. Im Bereich der Führungsstücke bzw. Führungsbereiche 43a, 43b ist der Führungskanal derart an die Kontur des zugeordneten Führungspfosten angepasst, dass die Führungsstücke bzw. Führungsbereiche 43a, 43b nahezu spielfrei den Führungspfosten umgreifen. Die Maße sind derart gewählt, dass einerseits eine Bewegung der Trägerplatte 44 entlang des Führungspfostens mit geringer Reibung möglich ist und dass andererseits eine Bewegung der Trägerplatte 44 in Fahrzeuglängsrichtung x bzw. eine Schwenkbewegung der Trägerplatte um die Fahrzeugquerachse y vermieden und derartige Bewegungen der Trägerplatte 44 bewirkende Kräfte über die Führungsbereiche 43a, 43b und den zugeordneten Führungspfosten in ein tragendes Türelement eingeleitet werden.

Die vorstehend erwähnten Kräfte können beispielsweise beim Abstützen einer Person auf der Armauflage auftreten, wobei erhöhte Kräfte und Drehmomente insbesondere dann vorliegen können, wenn die Armauflage nicht einfach nur als Stütze für den Unterarm während der Fahrt sondern auch zu anderen Zwecken benutzt wird, z.B. wenn ein Fahrzeuginsasse auf der Armauflage kniet.

Ferner weist die Trägerplatte 44 zwei in Fahrzeuglängsrichtung x voneinander beabstandete, beidseits des zentralen Führungskanals 48 angeordnete Kanäle 47a, 47b auf, in denen jeweils eine als Verdrehsicherung dienende Führungsschiene 42, 42b geführt ist. Auch diese weiteren Führungsschienen 42a, 42b sind jeweils an einem tragenden Türelement der Fahrzeugtür festgelegt. Diese Führungsschienen 42a, 42b sind in den zugeordneten Führungskanälen 47a, 47b jeweils mittels an der Trägerplatte 44 angeformter elastischer Elemente in Form von Zungen 470a, 470b klapperfrei gehalten.

Bezüglich der Fahrzeuglängsrichtung x sind die beiden Führungsschienen 42a, 42b derart mit Spiel in den zugeordneten Kanälen 47a, 47b der Trägerplatte 44 geführt, dass äußere Kräfte, die entlang der Fahrzeuglängsachse x, bzw. äußere Drehmomente, die um die Fahrzeugquerachse y wirken, über den zentralen Führungskanal 48 und die zugeordneten Führungspfosten in ein tragendes Türelement und damit die Tür- bzw. Fahrzeugkarosserie eingeleitet werden. Hierdurch wird auch eine Überbestimmung des Systems vermieden.

Die beiden zusätzlichen Führungsschienen 42a, 42b dienen vielmehr zur Ableitung äußerer Momente, die um die vertikale Fahrzeugachse z wirken, in ein tragendendes Türelement und damit in die Fahrzeugkarosserie. Hierzu sind die entsprechenden Führungsschienen 42a, 42b jeweils zwischen dem Boden des Führungskanals 47a bzw. 47b und den dem Kanalboden gegenüberliegenden elastischen Elementen 470a, 470b mit hinreichend geringem Spiel aufgenommen, so dass Kippbewegungen der Trägerplatte 44 und damit der Armauflage 2 um die vertikale Fahrzeugachse verhindert werden.

Ferner ist in den Figuren 5a bis 5c eine C-förmige Aufnahme 49 der Trägerplatte 44 erkennbar, in der die Spindelmutter eines der Höhenverstellung der Armauflage dienenden Spindelgetriebes drehfest aufgenommen werden kann. Diese Mutter 411 ist längsverschieblich auf einer durch den Antrieb der Verstelleinrichtung der Armauflage drehbaren Spindel geführt und überträgt somit die Verstellkraft des Antriebsmotors auf die Trägerplatte 44 und die Armauflage 2.

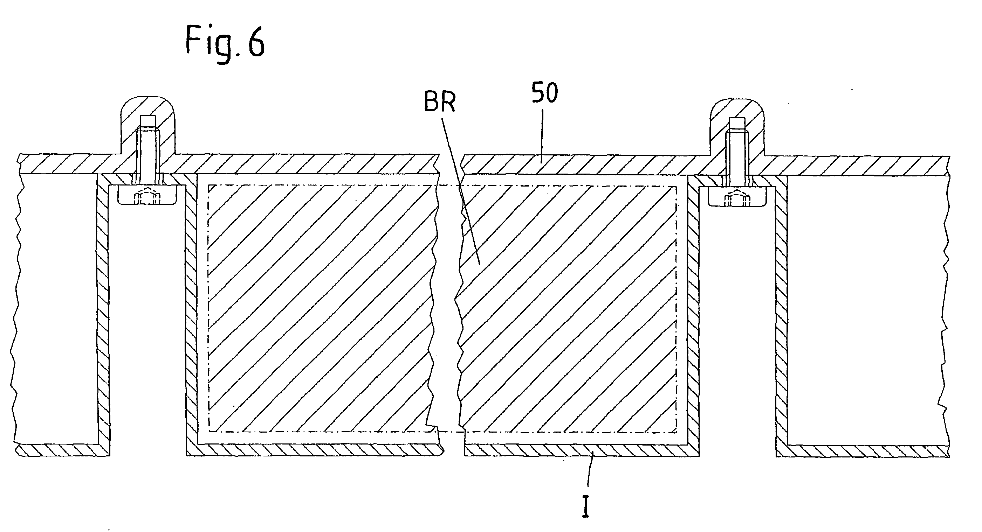

In Figur 6 ist schematisch ein Schnitt durch einen Aggregateträger 50 und eine hieran mittels Schrauben derart befestigte Türinnenverkleidung I dargestellt, dass ein Bauraum BR für die Aufnahme einer höhenverstellbaren Armauflage sowie von deren Trägerplatte und die erforderlichen Antriebs- bzw. Führungsmittel freigelassen ist. Hierzu ist die Türinnenverkleidung I im Bereich der Verbindungsstellen mit dem Aggregateträger 50 jeweils bis an diesen herangeführt, während sie zwischen den Befestigungsstellen zur Schaffung des Bauraums BR hinreichend von diesem beabstandet ist.

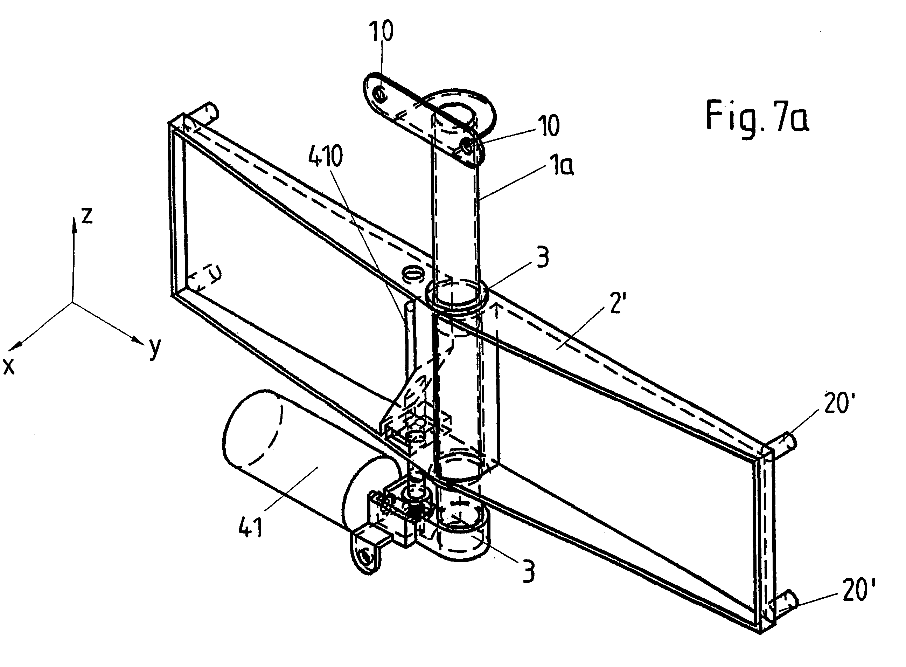

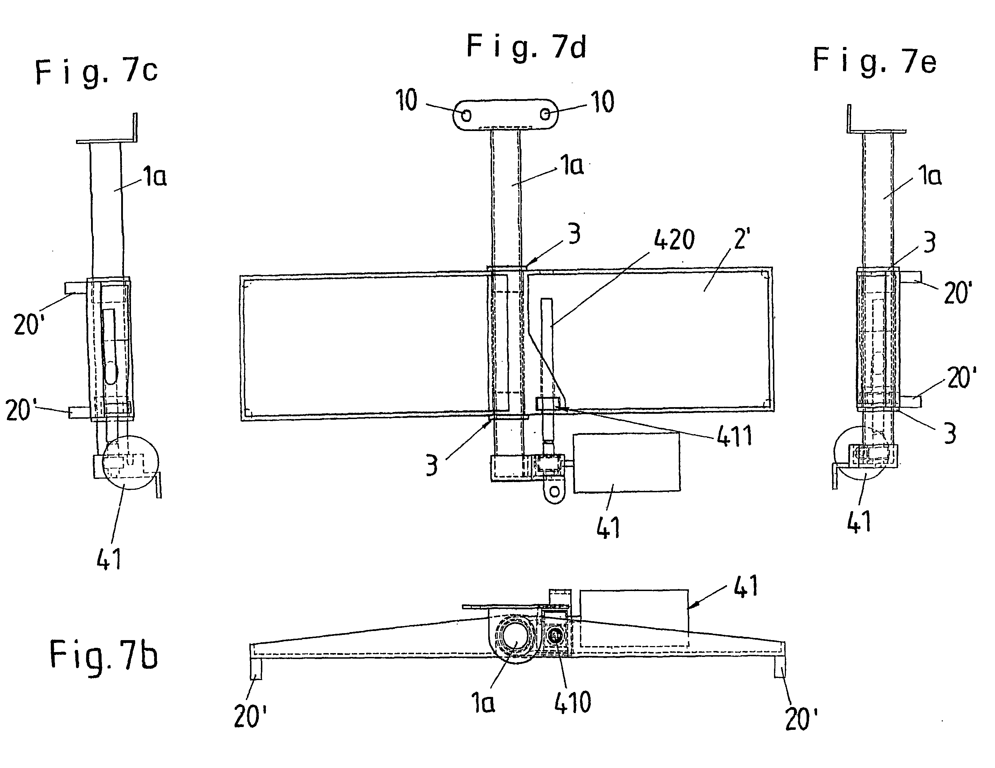

In den Figuren 7a bis 7e ist eine 1-Pfosten-Führung für eine höhenverstellbare Trägerplatte 2' einer Armauflage dargestellt, die einen rohrförmig ausgestalteten Führungspfosten 1a umfasst, der an seinen Enden jeweils mit einem Befestigungsflansch mit Befestigungsstellen 10 zur Befestigung an einem tragenden Türelement versehen ist.

An dem Führungspfosten 1a ist der Träger 20' mittels zweier vorzugsweise einstückig in die Trägerplatte 2' integrierter Führungsbuchsen 3 geführt, die mit größtmöglichem Abstand entlang der vertikalen Fahrzeugachse z voneinander beabstandet am oberen und unteren Ende der Trägerplatte 2' vorgesehen sind. Zur Bildung einstückig integrierter Buchsen 3 weist die Trägerplatte 2' an ihrem entlang der vertikalen Fahrzeugachse oberen und unteren Rand jeweils einen senkrecht abgewinkelten Endabschnitt auf, der mit entsprechenden, die Buchsen 3 bildenden Öffnungen versehen ist. Zur Befestigung einer Armauflage an der Trägerplatte 2' dienen Befestigungszapfen 20', die senkrecht von der Trägerplatte 2' abstehen.

Ein elektrischer Antriebsmotor 41 der Verstelleinrichtung sowie ein zugeordnetes Spindelgetriebe, das eine durch den Antriebsmotor 41 drehbare Spindel 410 sowie eine drehfest an der Trägerplatte 2' befestigte, entlang der Spindel 410 verschiebbare Spindelmutter 411 umfasst ist mit dem Führungspfosten 1a und der Trägerplatte 2' zu einer vormontierbaren, und komplett vorprüfbaren Baugruppe zusammengefasst. Hierzu ist der elektrische Antrieb 41 mit dem Führungspfosten 1a im Bereich seines entlang der vertikalen Fahrzeugachse z unteren Endes verbunden.

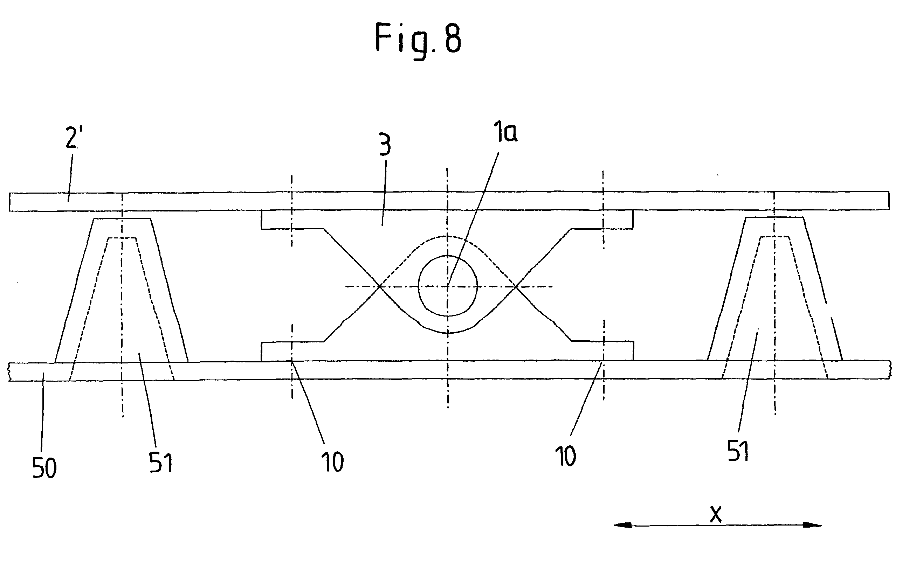

Figur 8 zeigt einen Querschnitt durch eine Führungseinrichtung der in den Figuren 7a bis ... gezeigten Art. Dabei ist der Führungspfosten 1a an Befestigungsstellen 10 mit einem Aggregateträger 50 verbunden, der auf die Türinnenhaut, insbesondere das Türinnenblech, einer Fahrzeugtür aufsetzbar ist. Die Trägerplatte 2' einer Armauflage lagert in diesem Fall mittels Führungsbuchsen 3 schwenkbar auf dem Führungspfosten 1 a.

Die Schwenkbarkeit der Trägerplatte 2' um die vertikale Fahrzugachse z ist jedoch begrenzt, durch zwei von dem Aggregateträger 50 in Richtung auf die Trägerplatte 2' abstehende Stützbereiche in Form von Vorsprüngen 51, die entlang der Fahrzeuglängsachse x voneinander beabstandet beidseits des Führungspfostens 1a angeordnet sind und deren freie Enden Stützflächen für die Trägerplatte 2' der Armauflage bilden. Hierdurch können Querkräfte, die zu einem Drehmoment um die vertikale Fahrzeugachse führen abgestützt werden. Solche Querkräfte werden in die Armauflage und damit die Trägerplatte 2' beispielsweise dann eingeleitet, wenn in die Armauflage eine Türzuziehgriff integriert ist, oder auch in Fällen von Missbrauch.

Dadurch, dass die Trägerplatte 2' durch die vorzugsweise durch Prägen oder Tiefziehen aus dem Aggregateträger 50 herausgeformten Vorsprünge 51 gegen ein zu starkes Verkippen gesichert ist, wird hier bei einer sehr kostengünstigen, einfach aufgebauten Führungseinrichtung mit genau einem Führungspfosten 1a und keinen zusätzlichen, der Verdrehsicherung dienenden Führungsschienen dennoch sichergestellt, dass größere Querkräfte nicht in die Türinnenverkleidung sondern über die Vorsprünge 51 in die Türkarosserie abgeleitet werden.

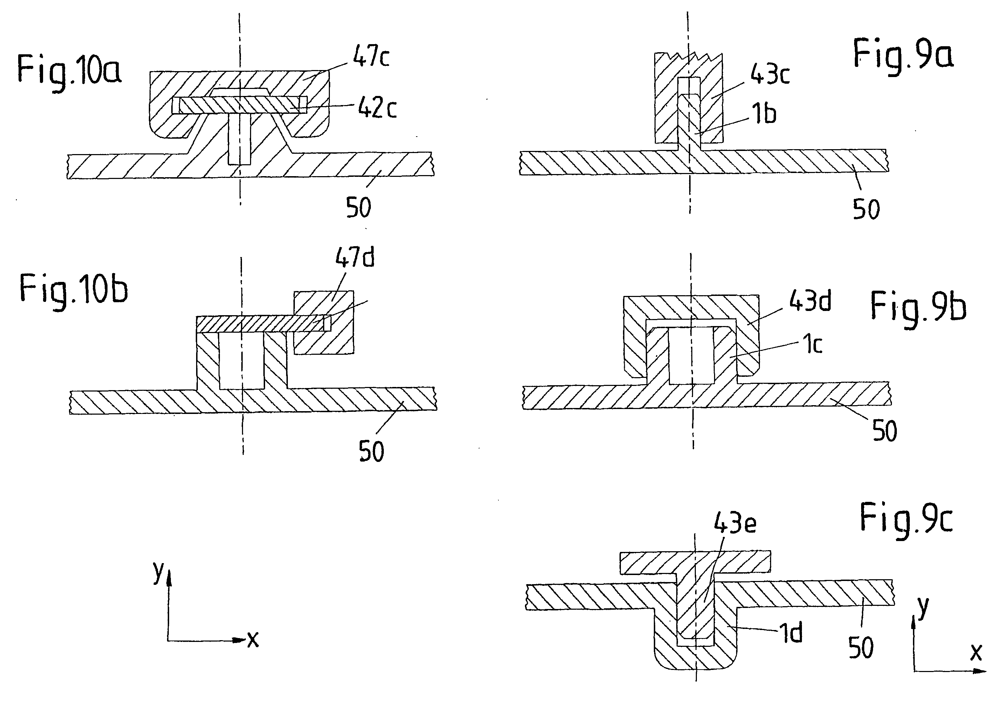

In den Figuren 9a bis 9c sind im Querschnitt unterschiedliche, als Profilteile ausgebildete längserstreckte Führungspfosten 1b, 1c, 1d dargestellt, die jeweils einstückig an einem Aggregateträger 50 einer Kraftfahrzeugtür oder alternativ einem Türinnenblech angeformt sind und denen jeweils ein entsprechendes Profilstück 43c, 43d, 43e als Führungsstück zugeordnet ist, welches mit der Trägerplatte einer Armauflage verbunden bzw. an dieser angeformt ist.

Grundsätzlich können beliebige Profilteile zur Bildung einer Längsführung verwendet werden, wie z. B. H-, C- oder L-Profile, die eine präzise Längsführung entlang der vertikalen Fahrzeugachse und eine zuverlässige Abstützung senkrecht hierzu entlang der Fahrzeuglängsachse ermöglichen.

In Umkehrung der in den bisherigen Figuren dargestellten Verhältnisse könnte auch jeweils das längserstreckte Führungselement in Form eines Führungspfostens oder dergleichen an der längsverschieblichen Trägerplatte der Armauflage vorsehen sein und die zugeordneten Führungsstücke, insbesondere in Form von Führungsbuchsen, an dem tragenden Türelement, wie einer Türinnenhaut oder einem Aggregateträger.

Ferner kann anstatt mehrerer, insbesondere zweier entlang der vertikalen Fahrzeugachse voneinander beabstandeter Führungsbuchsen auch eine einzelne Führungsbuchse zum Einsatz kommen, die sich über eine möglichst lange Strecke entlang der vertikalen Fahrzeugachse erstreckt.

Die Figuren 10a und 10b zeigen im Querschnitt zwei unterschiedliche Ausbildungen jeweils einer an einem Aggregateträger 50 einer Kraftfahrzeugtür vorgesehenen längserstreckten und als Verdrehsicherung dienenden Führungsschiene 42c bzw. 42d, denen entsprechende an einer Trägerplatte einer Armauflage befestigte bzw. einstückig angeformte Gleit- und Stützbereiche 47c bzw. 47d zugeordnet sind.

Anhand der Figuren 9a bis 9c ist erkennbar, dass die dort dargestellten Führungspfosten 1c bis 1e und die zugeordneten Führungsstücke 43c bis 43e jeweils entlang der Fahrzeuglängsachse x im wesentlichem spielfrei bzw. mit geringem Spiel zusammenwirken, so dass in Fahrzeuglängsrichtung x wirkende Kräfte sowie um die vertikale Fahrzeugachse y wirkende Drehmomente aufgenommen und in den Aggregateträger 50 abgeleitet werden können.

Im Gegensatz dazu sind die Führungsschienen 42c und 42d mit den zugeordneten Gleit- bzw. Führungsbereichen 47, 47d jeweils entlang der Fahrzeuglängsachse x spielbehaftet und quer dazu entlang der vertikalen Achse y im wesentlichen spielfrei bzw. mit sehr geringem Spiel zueinander angeordnet. Dort können also insbesondere entlang der vertikalen Fahrzeugachse y wirkenden Kräfte sowie um die vertikale Fahrzeugachse z Drehmomente aufgenommen werden.

Entscheidend ist, dass der zentrale Führungsposten und die zugeordneten Führungsstücke ein substanziell kleineres Spiel entlang der Fahrzeuglängsachse x aufweisen als die ggf. zusätzlich vorgesehenen Verdrehsicherungen, die durch Führungsschienen und zugeordnete Gleit- bzw. Stützbereiche gebildet werden, und dass andererseits die letztgenannten Verdrehsicherungen ein kleineres Spiel entlang der senkrecht zur Türebene verlaufenden Fahrzeugquerachse y aufweisen als die Führungspfosten mit den zugeordneten Führungsstücken.

Hierdurch ist sichergestellt, dass in Fahrzeuglängsrichtung x wirkende Kräfte über den zentralen Führungspfosten und entlang der Fahrzeugquerachse y wirkende Kräfte über die zusätzlichen Verdrehsicherungen in ein tragendes Türelement, wie z. B. einen Aggregateträger abgeführt werden können, ohne dass das System überbestimmt ist.

## Patentansprüche

1. Armlehnenbaugruppe für eine Kraftfahrzeugtür zum Einbau in ein Kraftfahrzeug, das eine Fahrzeuglängsachse und eine vertikale Fahrzeugachse aufweist, mit
- einer entlang der vertikalen Fahrzeugachse höhenverstellbaren Armauflage und
- einer Führungseinrichtung, durch die die Armauflage entlang der vertikalen Fahrzeugachse geführt ist,
- wobei die Führungseinrichtung genau ein entlang der Verstellrichtungen (z) der Armauflage (2) längserstrecktes Führungselement (1a, 43) aufweist, mittels dem die Armauflage (2) derart geführt ist, dass in Fahrzeuglängsrichtung (x) auf die Armauflage (2) wirkende Kräfte über das längserstreckte Führungselement (1a, 43) in ein tragendes Türelement (5, 50) eingeleitet werden und eine Verschiebung der Armauflage (2) in Fahrzeuglängsrichtung (x) verhindert wird,
- wobei zusätzlich ein Stützbereich (42a bis 42d, 47a bis 47d; 51) zum Begrenzen oder Verhindern einer Schwenkbewegung der Armauflage (2) bezüglich der vertikalen Fahrzeugachse (z) vorgesehen ist, über den sich die Armauflage (2) an einem tragenden Türelement abstützen kann,
**dadurch gekennzeichnet,**
**dass** nicht nur ein Stützbereich, sondern Stützbereiche (42a bis 42d, 47a bis 47d; 51) zum Begrenzen oder Verhindern einer Schwenkbewegung der Armauflage (2) bezüglich der vertikalen Fahrzeugachse (z) vorgesehen sind, über die sich die Armauflage (2) an einem tragenden Türelement abstützen kann, wobei die Armauflage (2) und das tragende Türelement über die Stützbereiche (42a bis 42d, 47a bis 47d, 51) derart mit Spiel zusammenwirken, dass entlang der Fahrzeuglängsrichtung (x) wirkende Kräfte nur über das längserstreckte Führungselement (1a, 43) in das tragende Türelement eingeleitet werden.

2. Armlehnenbaugruppe nach Anspruch 1, **dadurch gekennzeichnet, dass** das längserstreckte Führungselement (1a, 43) zusätzlich ein Verkippen der Armauflage (2) um eine senkrecht zur Türebene verlaufende Achse (y) verhindert.

3. Armlehnenbaugruppe nach Anspruch 1 oder 2, **dadurch gekennzeichnet, dass** die Armauflage (2) an einem Träger (2', 44) befestigt ist, der an dem längserstreckten Führungselement (1a, 43) geführt ist.

4. Armlehnenbaugruppe nach Anspruch 3, **dadurch gekennzeichnet, dass** der Träger (1, 44) eine Trägerplatte umfasst.

5. Armlehnenbaugruppe nach einen der vorhergehenden Ansprüche, **dadurch gekennzeichnet, dass** das Führungselement (1a, 1b, 1c, 1d, 43) durch einen Pfasten gebildet wird.

6. Armlehnenbaugruppe nach einem der vorhergehenden Ansprüche, **dadurch gekennzeichnet, dass** das Führungselement (1a, 43) rohrförmig ausgebildet ist.

7. Armlehnenbaugruppe nach einem der vorhergehenden Ansprüche, **dadurch gekennzeichnet, dass** das Führungselement (1a, 1b, 1c, 1d, 1e, 43) hohlzylindrisch oder als Profilteil, insbesondere als Profilschiene, ausgebildet ist.

8. Armlehnenbaugruppe nach einem der vorhergehenden Ansprüche, **dadurch gekennzeichnet, dass** die Armauflage (2) um die Längsachse des längserstreckten Führungselementes (1a) verschwenkbar an diesem gelagert ist.

9. Armlehnenbaugruppe nach einem der vorhergehenden Ansprüche, **dadurch gekennzeichnet, dass** das Führungselement (1a, 1b, 1c, 1d, 1e, 43) an dem tragenden Türelement (5, 50) fixiert ist.

10. Armlehnenbaugruppe nach einem der vorhergehenden Ansprüche, **dadurch gekennzeichnet, dass** dem längserstreckten Führungselement (1a, 1b, 1c, 1d, 1e, 43) mindestens ein Führungsstück (3, 43a, 43b, 43c, 43d, 43e) zugeordnet ist, das längsverschieblich an dem längserstreckten Führungselement lagert.

11. Armlehnenbaugruppe nach einem der vorhergehenden Ansprüche, **dadurch gekennzeichnet, dass** dem Führungselement (1a, 43) mindestens zwei entlang der Erstreckungsrichtung (z) des Führungselementes (1a, 43) voneinander beabstandete Führungsstücke (3, 43a, 43b) zugeordnet sind, die relativ zu dem Führungselement (1a, 43) verschiebbar sind.

12. Armlehnenbaugruppe nach Anspruch 11, **dadurch gekennzeichnet, dass** die beiden Führungsstücke (3, 43a, 43b) entlang der Erstreckungsrichtung (z) des Führungselementes (1a, 43) den größtmöglichen Abstand aufweisen.

13. Armlehnenbaugruppe nach Anspruch 10, **dadurch gekennzeichnet, dass** genau ein Führungsstück vorgesehen ist, welches entlang der Erstreckungsrichtung (z) des Führungselementes die größtmögliche Länge aufweist.

14. Armlehnenbaugruppe nach einem der Ansprüche 10 bis 13, **dadurch gekennzeichnet, dass** das mindestens eine Führungsstück (3) durch eine Führungsbuchse gebildet wird.

15. Armlehnenbaugruppe nach einem der Ansprüche 10 bis 13, **dadurch gekennzeichnet, dass** das mindestens eine Führungsstück (43a, 43b) durch eine Verjüngung eines Führungskanals (48) gebildet wird.

16. Armlehnenbaugruppe nach einem der Ansprüche 10 bis 13, **dadurch gekennzeichnet, dass** das mindestens eine Führungsstück (43a, 43b, 43c, 43d, 43e) durch ein Profilstück gebildet wird.

17. Armlehnenbaugruppe nach einem der Ansprüche 10 bis 16, **dadurch gekennzeichnet, dass** das mindestens eine Führungsstück (3, 43a, 43b, 43c, 43d, 43e) bezüglich der Armauflage (2) festgelegt ist.

18. Armlehnenhaugruppe nach Anspruch 3 und 17, **dadurch gekennzeichnet, dass** das Führungsstück (3, 43a, 43b, 43c, 43d, 43e) an dem Träger (2', 44) festgelegt ist.

19. Armlehnenbaugruppe nach Anspruch 11 und 18, **dadurch gekennzeichnet, dass** die beiden Führungsstücke (3, 43a, 43b) entlang der vertikalen Fahrzeugachse (z) betrachtet an je einem Rand des Trägers (2', 44) angeordnet sind.

20. Armlehnenbaugruppe nach Anspruch 13 und 18, **dadurch gekennzeichnet, dass** sich das genau eine Führungsstück entlang der vertikalen Fahrzeugachse (z) betrachtet über die gesamte Länge des Trägers (2', 44) erstreckt.

21. Armlehnenbaugruppe nach einem der vorhergehenden Ansprüche, **dadurch gekennzeichnet, dass** die Stützbereiche durch zwei Vorsprünge (51) gebildet werden, die sich zwischen der Armauflage (2) und einem tragenden Türelement (5, 50) erstrecken, und dass die beiden Vorsprünge (51) entlang der Fahrzeuglängsachse (x) voneinander beabstandet, beidseits des längserstreckten Führungselementes (3) angeordnet sind.

22. Armlehnenbaugruppe nach Anspruch 3 und 21, **dadurch gekennzeichnet, dass** sich die Vorsprünge (51) zwischen dem Träger (2') der Armauflage (2) und dem tragenden Türelement (5, 50) erstrecken.

23. Armlehnenbaugruppe nach Anspruch 21 oder 22, **dadurch gekennzeichnet, dass** die Vorsprünge (51) an dem tragenden Türelement (50) angeformt sind.

24. Armlehnenbaugruppe nach einem der vorhergehenden Ansprüche, **dadurch gekennzeichnet, dass** zwei in Fahrzeuglängsrichtung (x) voneinander beabstandete, beidseits des längserstreckten Führungselementes (43) angeordnete Längsführungen (42a, 42b) als zusätzliche Verdrehsicherung vorgesehen sind.

25. Armlehnenbaugruppe nach Anspruch 24, **dadurch gekennzeichnet, dass** die Längsführungen gebildet werden durch eine Führungsschiene (42a, 42b, 42c, 42d) und einen hierzu in Längsrichtung verschieblichen Führungen (47a, 47b, 47c, 47d).

26. Armlehnenbaugruppe nach Anspruch 3 und 25, **dadurch gekennzeichnet, dass** die Führungsschiene (42a, 42b) an einem tragenden Türelement (5, 50) vorgesehen ist.

27. Armlehnenbaugruppe nach einem der vorhergehenden Ansprüche, **dadurch gekennzeichnet, dass** die Führungseinrichtung als Klapperschutz dienende elastische Elemente (470a, 470b) aufweist.

## Claims

1. Armrest subassembly for a motor vehicle door for installation in a motor vehicle which has a vehicle longitudinal axis and a vertical vehicle axis with
- an arm support vertically adjustable along the vertical vehicle axis and
- a guide device through which the arm support is guided along the vertical vehicle axis
- whereby the guide device has just one guide element (1a, 43) elongated along the adjusting directions (z) of the arm support (2) and by means of which the arm support (2) is guided so that forces acting in the vehicle longitudinal direction (x) on the arm support (2) are introduced through the elongated guide element (1a, 43) into a supporting door element (5, 50) and displacement of the arm support (2) in the vehicle longitudinal direction (x) is prevented,
- whereby an additional supporting area (42a to 42d, 47a to 47d, 51) is provided for restricting or preventing a swivel movement of the arm support (2) relative to the vertical vehicle axis (z) through which the arm support (2) can be supported on a supporting door element
**characterised in that**
not only one supporting area, but supporting areas (42a to 42d, 47a to 47d, 51) are provided for limiting or preventing a swivel movement of the arm support relative to the vertical vehicle axis through which the arm supports (2) can be supported on a supporting door element whereby the arm support (2) and the supporting door element interact with play through the supporting areas (42a to 42d, 47a to 47d, 51) so that forces acting along the vehicle longitudinal direction (x) are only introduced into the supporting door element through the elongated guide element (1a, 43).

2. Armrest subassembly according to claim 1, **characterised in that** the elongated guide element (1a, 43) additionally prevents the arm support (2) from tilting about an axis (y) running perpendicular to the door plane.

3. Armrest subassembly according to claim 1 or 2, **characterised in that** the arm support (2) is fixed on a holder (2', 44) which is guided on the elongated guide element (1a, 43).

4. Armrest subassembly according to claim 3, **characterised in that** the holder (1, 43) comprises a support plate.

5. Armrest subassembly according to one of the preceding claims, **characterised in that** the guide element (1a, 1b, 1c, 1d, 43) is formed by a post

6. Armrest subassembly according to one of the preceding claims, **characterised in that** the guide element (1a, 43) is of tubular design.

7. Armrest subassembly according to one of the preceding claims, **characterised in that** the guide element (1a, 1b, 1c, 1d, 1e, 43) is designed hollow cylindrical or as a profiled part, more particularly as a profiled rail.

8. Armrest subassembly according to one of the preceding claims, **characterised in that** the arm support (2) is mounted for swivel movement on the elongated guide element (1a) to swivel about the longitudinal axis of same.

9. Armrest subassembly according to one of the preceding claims, **characterised in that** the guide element (1a, 1b, 1c, 1d, 1e, 43) is fixed on the supporting door element (5, 50).

10. Armrest subassembly according to one of the preceding claims, **characterised in that** the elongated guided element (1a, 1b, 1c, 1d, 1e, 43) is associated with at least one guide member (3, 43a, 43b, 43c, 43d, 43e) which is mounted longitudinally displaceable on the elongated guide element.

11. Armrest subassembly according to one of the preceding claims, **characterised in that** the guide element (1a, 43) is associated with at least two guide members (3, 43a, 43b) which are spaced from each other along the extension direction (z) of the guide element (1a, 43) and which are displaceable relative to the guide element (1a, 43).

12. Armrest subassembly according to claim 11, **characterised in that** the two guide members (3, 43a, 43b) have the largest possible spacing along the extension direction (z) of the guide element (1a, 43).

13. Armrest subassembly according to claim 10, **characterised in that** just one guide member is provided which has the greatest spacing possible along the extension direction (z) of the guide element.

14. Armrest subassembly according to one of claims 10 to 13, **characterised in that** the at least one guide member (3) is formed by a guide sleeve.

15. Armrest subassembly according to one of claims 10 to 13, **characterised in that** the at least one guide member (43a, 43b) is formed by a tapering of a guide channel (48).

16. Armrest subassembly according to one of claims 10 to 13, **characterised in that** the at least one guide member (3a, 43b, 43c, 43d, 43e) is formed by a profiled member.

17. Armrest subassembly according to one of claims 10 to 16, **characterised in that** the at least one guide member (3, 43a, 43b, 43c, 43d, 43e) is fixed relative to the arm support (2).

18. Armrest subassembly according to claim 3 and 17, **characterised in that** the guide member (3, 43a, 43b, 43c, 43d, 43e) is fixed on the holder (2', 44).

19. Armrest subassembly according to claim 11 and 18, **characterised in that** the two guide members (3, 43a, 43b) are each mounted at one edge of the holder (2', 44) viewed along the vertical vehicle axis (z).

20. Armrest subassembly according to claim 13 and 18, **characterised in that** the just one guide member extends over the entire length of the holder (2', 44) viewed along the vertical vehicle axis (z).

21. Armrest subassembly according to one of the preceding claims, **characterised in that** the supporting areas are formed by two projections (51) which extend between the arm support (2) and a supporting door element (5, 50) and that the two projections (51) are arranged spaced from each other along the vehicle longitudinal axis (x) either side of the elongated guide element (3).

22. Armrest subassembly according to claim 3 and 21, **characterised in that** the projections (51) extend between the holder (2') of the arm support (2) and the supporting door element (5, 50).

23. Armrest subassembly according to claim 21 or 22, **characterised in that** the projections (51) are formed on the supporting door element (50).

24. Armrest subassembly according to one of the preceding claims, **characterised in that** two longitudinal guides (42a, 42b) spaced from each other in the vehicle longitudinal direction (x) and arranged either side of the elongated guide element (43) are provided as additional anti-rotation lock.

25. Armrest subassembly according to claim 24, **characterised in that** the longitudinal guides are formed by a guide rail (42a, 42b, 42c, 42d) and a guide (47a, 47b, 47c, 47d) displaceable in the longitudinal direction relative thereto.

26. Armrest subassembly according to claim 3 and 25, **characterised in that** the guide rail (42a, 42b) is provided on a supporting door element (5, 50).

27. Armrest subassembly according to one of the preceding claims, **characterised in that** the guide device has elastic elements (470a, 470b) serving to prevent rattling.

## Revendications

1. Groupe structurel formant accoudoir pour une porte de véhicule automobile destinée à être montée dans un véhicule automobile qui présente un axe longitudinal et un axe vertical de véhicule, comprenant :
- un repose-bras réglable en hauteur le long de l'axe vertical du véhicule, et
- un dispositif de guidage au moyen duquel le repose-bras est guidé le long de l'axe vertical du véhicule,
- ledit dispositif de guidage présentant exactement un élément de guidage (1a, 43) allongé le long des directions de réglage (z) du repose-bras (12), au moyen duquel le repose-bras (2) est guidé de telle manière que les forces qui agissent en direction longitudinale (x) du véhicule sur le repose-bras (2) sont menées via l'élément de guidage allongé (1a, 43) vers un élément de porte porteur (5, 50), et une translation du repose-bras (2) dans la direction longitudinale du véhicule (x) est empêchée,
-- il est prévu en supplément une zone de soutien (42a à 42d, 47a à 47d ; 51) pour limiter ou pour empêcher un mouvement pivotant du repose-bras (2) par rapport à l'axe vertical du véhicule (z), via laquelle le repose-bras (2) peut s'appuyer sur un élément de porte porteur,
**caractérisé en ce qu'**il est prévu non seulement une zone de soutien, mais plusieurs zones de soutien (42a à 42d, 47a à 47d ; 51) pour limiter ou pour empêcher un mouvement de pivotement du repose-bras (2) par rapport à l'axe vertical de véhicule (z), via lesquels le repose-bras (2) peut s'appuyer sur un élément de porte porteur, le repose-bras (2) et l'élément de porte porteur coopérant via les zones de soutien (42a à 42d, 47a à 47d ; 51) avec jeu de telle manière que des forces agissant le long de la direction longitudinale du véhicule (x) peuvent être menées uniquement via l'élément de guidage allongé (1a, 43) vers l'élément de porte porteur.

2. Groupe structurel formant accoudoir selon la revendication 1, **caractérisé en ce que** l'élément de guidage allongé (1a, 43) empêche additionnellement un basculement du repose-bras (2) autour d'un axe qui s'étend perpendiculairement au plan de porte.

3. Groupe structurel formant accoudoir selon l'une ou l'autre des revendications 1 est 2, **caractérisé en ce que** le repose-bras (2) est fixé sur un support (2', 44) qui est guidé sur l'élément de guidage allongé (1a, 43).

4. Groupe structurel formant accoudoir selon la revendication 3, **caractérisé en ce que** le support (1, 44) comprend une plaque porteuse.

5. Groupe structurel formant accoudoir selon l'une des revendications précédentes, **caractérisé en ce que** l'élément de guidage (1a, 1b, 1c, 1d, 43) est formé par un poteau.

6. Groupe structurel formant accoudoir selon l'une des revendications précédentes, **caractérisé en ce que** l'élément de guidage (1a, 43) est réalisé sous forme de tube.

7. Groupe structurel formant accoudoir selon l'une des revendications précédentes, **caractérisé en ce que** l'élément de guidage (1a, 1b, 1c, 1d, 1e, 43) est réalisé sous forme cylindrique creuse, ou sous forme de pièce profilée, en particulier sous forme de rail profilé.

8. Groupe structurel formant accoudoir selon l'une des revendications précédentes, **caractérisé en ce que** le repose-bras (2) est monté sur l'élément de guidage allongé (1a) avec possibilité de pivotement autour de l'axe longitudinal de celui-ci.

9. Groupe structurel formant accoudoir selon l'une des revendications précédentes, **caractérisé en ce que** l'élément de guidage (1a, 1b, 1c, 1d, 1e, 43) est fixé sur l'élément de porte porteur (5, 50).

10. Groupe structurel formant accoudoir selon l'une des revendications précédentes, **caractérisé en ce qu'**à l'élément de guidage allongé (1a, 1b, 1c, 1d, 1e, 43) est associée au moins une pièce de guidage (3, 43a, 43b, 43c, 43d, 43e), qui assure le montage avec possibilité de déplacement longitudinal sur l'élément de guidage allongé.

11. Groupe structurel formant accoudoir selon l'une des revendications précédentes, **caractérisé en ce qu'**à l'élément de guidage (1a, 43) sont associées au moins deux pièces de guidage (3, 43a, 43b) espacées l'une de l'autre le long de la direction (z) de l'extension de l'élément de guidage (1a, 43), lesdites pièces de guidage étant déplaçables par rapport à l'élément de guidage (1a, 43).

12. Groupe structurel formant accoudoir selon la revendication 11, **caractérisé en ce que** les deux pièces de guidage (3, 43a, 43b) présentent la distance la plus élevée possible le long de la direction (z) de l'extension de l'élément de guidage (1a, 43).

13. Groupe structurel formant accoudoir selon la revendication 10, **caractérisé en ce qu'**il est prévu exactement une pièce de guidage, qui présente le long de la direction (z) de l'extension de l'élément de guidage la longueur la plus élevée possible.

14. Groupe structurel formant accoudoir selon l'une des revendications 10 à 13, **caractérisé en ce que** ladite au moins une pièce de guidage (43a, 43b) est formée par une douille.

15. Groupe structurel formant accoudoir selon l'une des revendications 10 à 13, **caractérisé en ce que** ladite au moins une pièce de guidage (43a, 43b) est formée par un rétrécissement d'un canal de guidage (48).

16. Groupe structurel formant accoudoir selon l'une des revendications 10 à 13, **caractérisé en ce que** ladite au moins une pièce de guidage (43a, 43b, 43c, 43d, 43e) est formée par une pièce profilée.

17. Groupe structurel formant accoudoir selon l'une des revendications 10 à 16, **caractérisé en ce que** ladite au moins une pièce de guidage (3, 43a, 43b, 43c, 43d, 43e) est immobilisée par rapport au repose-bras (2).

18. Groupe structurel formant accoudoir selon les revendications 3 et 17, **caractérisé en ce que** la pièce de guidage (3, 43a, 43b, 43c, 43d, 43e) est immobilisée sur le support (2', 44).

19. Groupe structurel formant accoudoir selon les revendications 11 et 18, **caractérisé en ce que** les deux pièces de guidage (3, 43a, 43b), observées le long de l'axe vertical (z) du véhicule, sont agencées chacune sur un bord du support (2', 44).

20. Groupe structurel formant accoudoir selon les revendications 13 et 18, **caractérisé en ce que** ladite exactement une pièce de guidage, observée le long de l'axe vertical (z) du véhicule, s'étend sur la longueur totale du support (2', 44).

21. Groupe structurel formant accoudoir selon l'une des revendications précédentes, **caractérisé en ce que** les zones de soutien sont formées par deux saillies (51) qui s'étendent entre le repose-bras (2) et un élément de porte porteur (5, 50), et **en ce que** les deux saillies (51) sont agencées à distance l'une de l'autre le long de l'axe longitudinal (x) du véhicule, des deux côtés de l'élément de guidage allongé (3).

22. Groupe structurel formant accoudoir selon les revendications 3 et 21, **caractérisé en ce que** les saillies (51) s'étendent entre le support (2') du repose-bras (2) et l'élément de porte porteur (5, 50).

23. Groupe structurel formant accoudoir selon l'une ou l'autre des revendications 21 et 22, **caractérisé en ce que** les saillies (51) sont conformées sur l'élément de porte porteur (50).

24. Groupe structurel formant accoudoir selon l'une des revendications précédentes, **caractérisé en ce qu'**il est prévu deux guidages longitudinaux (42a, 42b), écartés l'un de l'autre en direction longitudinale (x) du véhicule et agencés des deux côtés de l'élément de guidage allongé (43), à titre de sécurité additionnelle anti-rotation.

25. Groupe structurel formant accoudoir selon la revendication 24, **caractérisé en ce que** les guidages longitudinaux sont formés par un rail de guidage (42a, 42b, 42c, 42d) et par des guidages (47a, 47b, 47c, 47d) déplaçables en direction longitudinale par rapport à celui-ci.

26. Groupe structurel formant accoudoir selon les revendications 3 et 25, **caractérisé en ce que** le rail de guidage (42a, 42b) est prévu sur un élément de porte porteur (5, 50).

27. Groupe structurel formant accoudoir selon l'une des revendications précédentes, **caractérisé en ce que** le moyen de guidage comprend des éléments élastiques (470a, 470b) à titre de protection anti-battements.
